(19) Europäisches Patentamt
European Patent Office
Office européen des brevets

(11) **EP 2 781 952 A1**

(12) **EUROPÄISCHE PATENTANMELDUNG**

(43) Veröffentlichungstag:
24.09.2014 Patentblatt 2014/39

(51) Int Cl.:
*G02C 7/04* (2006.01)

(21) Anmeldenummer: **13001494.7**

(22) Anmeldetag: **22.03.2013**

(84) Benannte Vertragsstaaten:
**AL AT BE BG CH CY CZ DK EE ES FI FR GB GR
HR HU IE IS IT LI LT LU LV MC MK MT NL NO PL
PT RO RS SE SI SK SM TR**
Benannte Erstreckungsstaaten:
**BA ME**

(71) Anmelder: **Hecht Contactlinsen GmbH
79280 Au (DE)**

(72) Erfinder: **Muckenhirn, Dieter
D-79299 Wittnau (DE)**

(74) Vertreter: **Geitz Truckenmüller Lucht
Werthmannstrasse 15
79098 Freiburg (DE)**

(54) **Multifokale ophthalmologische Linse**

(57) Es wird eine multifokale ophthalmologische Linse vorgeschlagen mit einem zentralen runden rotationssymmetrischen Linsenbereich (1, 6) mit vorgegebener Brennweite, dessen Symmetrieachse der zentralen optischen Achse (19) der Linse entspricht, mit mehreren, den zentralen Linsenbereich (1, 6) umgebenden konzentrischen, ringförmigen Linsenbereichen (2, 3, 4, 7, 8, 9) mit unterschiedlichen Brennweiten, mit einem Krümmungsradius und einem Krümmungsmittelpunkt (21, 22, 23, 24) jedes Linsenbereichs (1, 2, 3, 4, 6, 7, 8, 9), wobei der Krümmungsradius innerhalb eines Linsenbereichs (1, 2, 3, 4, 6, 7, 8, 9) zumindest in radialer Richtung ausgehend von der zentralen optischen Achse (19) im wesentlichen konstant ist. Der Krümmungsradius nimmt beginnend mit dem zentralen Linsenbereich (1, 6) bis zum äußersten ringförmigen Linsenbereich (4, 9) im wesentlichen stufenweise ab oder zu. Die Krümmungsmittelpunkte (22, 23, 24) der ringförmigen Linsenbereiche (2, 3, 4, 7, 8, 9) sind dabei abseits der zentralen optischen Achse (19) der Linse.

Fig. 1

EP 2 781 952 A1

**Beschreibung**

Es wird eine multifokale ophthalmologische Linse vorgeschlagen.

Bei derartigen Linsen kann es sich um weiche oder formstabile Kontaktlinsen oder um Intraokularlinsen handeln. Sie weisen mehrere definierte Bereiche oder Zonen mit unterschiedlichem Krümmungsradius, unterschiedlicher Brennweite und unterschiedlicher Dioptrienzahl auf. Die Bereiche sind konzentrisch angeordnet. Typischerweise ist eine Multifokallinse mit mindestens einer Nahsichtzone und mindestens einer Fernsichtzone ausgestattet. Die Bereiche oder Zonen der Multifokallinse sorgen für eine scharfe Abbildung von in unterschiedlicher Entfernung zu einer Person angeordneten Objekten auf der Netzhaut der Person. Dabei befinden sich die Bereiche der Linse gleichzeitig vor der Pupille des Auges. Dies wird als simultane Abbildung bezeichnet. Von den verschiedenen im Sichtfeld einer Person befindlichen Objekten werden gleichzeitig ein scharfes Bild und eines oder mehrere unscharfe Bilder auf der Netzhaut erzeugt.

Bekannte multifokale Linsen weisen entweder eine kontinuierlich vom Zentrum radial nach außen sich ändernde optische Wirkung auf oder sind mit mehreren ringförmig angeordneten Bereichen mit unterschiedlicher optischer Wirkung ausgestattet. Dabei ist die Brennweite oder die Dioptrienzahl innerhalb der ringförmigen Bereiche variabel. Darüber hinaus sind Multifokallinsen mit mehreren ringförmigen Bereichen bekannt, wobei sich als Nahsichtzone ausgebildete Bereiche mit als Fernsichtzone ausgebildeten Bereichen abwechseln.

Als nachteilig erweist sich, dass die simultane Abbildung der bekannten multifokalen Linsen zu einer Verminderung des Kontrastes führt und die Sehqualität damit insgesamt reduziert wird. Dies sorgt insbesondere bei schlechten Lichtbedingungen und bei kontrastarmen Objekten für eine erhebliche Beeinträchtigung beim Sehen mit der Folge einer notwendigen erhöhten Konzentration und einer schnellen Ermüdung der die Linse tragenden Person.

Der Erfindung liegt die Aufgabe zugrunde, eine multifokale ophthalmologische Linse zur Verfügung zu stellen, welche die oben genannten Nachteile vermeidet und ein kontrastreiches Sehen auch bei geringer Helligkeit ermöglicht.

Diese Aufgabe wird durch eine multifokale ophthalmologische Linse mit den Merkmalen des Anspruchs 1 gelöst. Die multifokale ophthalmologische Linse mit den Merkmalen des Anspruchs 1 zeichnet sich durch mehrere runde Linsenbereiche aus, die sich ringförmig angeordnet sind, wobei die Brennweite innerhalb eines Linsenbereichs zumindest in radialer Richtung im wesentlichen konstant ist, und wobei die Brennweite beginnend mit einem zentralen runden Linsenbereich bis zu einem äußersten ringförmigen Linsenbereich von Linsenbereich zu Linsenbereich im wesentlichen stufenweise abnimmt oder zunimmt. Gleiches gilt für die Krümmungsradien und die Dioptrienzahl der Linsenbereiche. Der Krümmungsradius und die Dioptrienzahl sind in einem Linsenbereich in radialer Richtung im wesentlichen konstant. Sie nehmen von Linsenbereich zu Linsenbereich im wesentlichen stufenweise zu oder ab. Die Linsenbereiche können kreisrund oder oval sein oder eine sonstige runde Form aufweisen. Die Brennweiten, Krümmungsradien und Dioptrienzahl der Linsenbereiche sind verschieden. Der zentrale Linsenbereich kann als Nahsichtzone ausgebildet sein und eine an das Auge der die Linse tragenden Person angepasste Brennweite aufweisen. In diesem Fall ist der äußerste ringförmige Linsenbereich oder sind die äußeren ringförmigen Linsenbereiche als Fernsichtzone ausgebildet und weisen eine an das Auge der die Linse tragenden Person angepasste Brennweite auf. In den Linsenbereichen dazwischen ändert sich die Brennweite von der Brennweite des zentralen Linsenbereichs schritt- oder stufenweise bis zu der Brennweite des äußersten Linsenbereichs. Der zentrale Linsenbereich kann auch als Fernsichtzone ausgebildet sein. In diesem Fall sind der oder die äußeren ringförmigen Linsenbereiche als Nahsichtzone ausgebildet. In den Linsenbereichen dazwischen ändert sich die Brennweite schrittweise von der Brennweite des zentralen Linsenbereichs bis zu der Brennweite des peripheren Linsenbereichs. Diese Linsenbereiche können auch als Mittelsichtzone bezeichnet werden. Aufgrund der sich schrittweise von Linsenbereich zu Linsenbereich ändernden Brennweite wird ein optimales Verhältnis von Kontrast und Schärfe erreicht. Dadurch wird die Sehqualität gegenüber bekannten Linsen erheblich verbessert. Dies ist ein wesentlicher Vorteil gegenüber bekannten Linsen, welche nur mit einer oder mehreren Nahsichtzonen und mit nur einer oder mehreren Fernsichtzonen ausgestattet sind.

Bevorzugt ist der zentrale Linsenbereich als Fernsichtzone ausgebildet, wenn die Linse eine Kontaktlinse ist, die sich beim Tragen auf dem Auge verschieben kann. Diese Relativbewegung der Linse auf dem Auge wird als alternierender Effekt bezeichnet. Er tritt insbesondere bei formstabilen Kontaktlinsen auf. Soll dagegen nur die Mehrstärken- oder Additionswirkung zum Tragen kommen, ohne dass sich die Linse beim Tragen spürbar relativ zum Auge bewegt, so ist der zentrale Linsenbereich bevorzugt als Nahsichtzone ausgebildet. Dies ist insbesondere bei weichen Kontaktlinsen der Fall.

Der zentrale runde Linsenbereich ist rotationssymmetrisch. Seine Symmetrieachse entspricht der zentralen optischen Achse der Linse. Jeder Linsenbereich weist einen Krümmungsmittelpunkt und einen Krümmungsradius auf, welche die Brennweite beeinflussen. Die Symmetrieachse des zentralen runden Linsenbereichs verläuft durch den Krümmungsmittelpunkt des zentralen runden Linsenbereichs. Die Krümmungsmittelpunkte der ringförmigen Linsenbereiche liegen nicht auf der zentralen optischen Achse der Linse und damit nicht auf der Symmetrieachse des zentralen Linsenbereichs.

Die Linse weist einen oberen Abschnitt und einen unteren Abschnitt auf, wobei die Grenze zwischen dem oberen und unteren Abschnitt durch eine Horizontalebene gebildet wird, die durch die zentrale optische Achse der Linse verläuft. Die Linse richtet sich auf dem Auge eines Benutzers so aus, dass die Horizontalebene im wesentlichen mit einer durch die Hauptfixierachse des Auges verlaufenden, auf den Horizont ausgerichteten Ebene zusammenfällt. Die Krümmungsmittelpunkte der ringförmigen Linsenbereiche befinden sich unterhalb oder oberhalb der Horizontalebene der Linse. Die Linse ist dabei derart gestaltet, dass sich die auf das Auge eines Benutzers aufgesetzte Linse ohne weiteres Zutun ausrichtet. Dabei ist der obere Abschnitt der Linse oben angeordnet und der untere Abschnitt der Linse unten.

Bei einer Bewegung des Auges nach oben oder unten verschiebt sich die Linse auf dem Auge. Richtet die betreffende Person beispielsweise ihren Blick nach unten, so wandert die Linse auf dem Auge nach oben. Diejenige Achse, unter der eine Person Gegenstände am besten fixieren kann, wird als Hauptfixierachse des Auges bezeichnet. Blickt eine Person gerade aus, so ist die Linse derart auf dem Auge angeordnet, dass die Hauptfixierachse des Auges mit der Symmetrieachse des zentralen Bereichs und damit mit der zentralen optischen Achse der Linse zusammenfällt. Blickt die Person nach unten, so verschiebt sich die Linse nach oben und die Hauptfixierachse fällt nicht mehr mit der zentralen optischen Achse der Linse zusammen. Da sich die Krümmungsmittelpunkte der ringförmigen Linsenbereiche nicht auf der zentralen optischen Achse befinden, können sie derart angeordnet sein, dass sie sich im Falle einer Verschiebung der Linse auf dem Auge auf der Hauptfixierachse des Auges befinden. Der Betrachter kann somit mit den zugehörigen ringförmigen Linsenbereich scharf sehen.

Je weiter eine Person ihren Blick nach unten oder oben richtet, um so weiter verschiebt sich die Linse auf dem Auge. Die Positionen der Krümmungsmittelpunkte der verschiedenen ringförmigen Linsenbereiche sind daher bevorzugt derart, dass sich ihre Entfernung von der zentralen optischen Achse von Linsenbereich zu Linsenbereich beginnend mit dem zentralen Linsenbereich vergrößert.

Die radiale Richtung, entlang der die Brennweite eines Linsenbereichs konstant ist, bezieht sich dabei auf die zentrale optische Achse der Linse. In radialer Richtung ausgehend von dieser zentralen optischen Achse ist die Brennweite eines Linsenbereichs im wesentlichen konstant. Vorzugsweise ändert sie sich vom inneren Rand des Linsenbereichs zu seinem äußeren Rand nicht. Hiervon ausgenommen können die Übergänge oder Übergangsbereiche zwischen benachbarten Linsenbereichen sein. Um eine sprunghafte oder abrupte Änderung des Krümmungsradius zwischen zwei benachbarten Linsenbereichen zu vermeiden, kann im Übergangsbereich eine kontinuierliche Änderung des Krümmungsradius erfolgen.

Die Brennweite kann sich innerhalb eines Linsenbereiches in Umfangsrichtung ändern und in verschiedenen Winkelabschnitten innerhalb eines Linsenbereichs unterschiedlich sein. Dabei wird jedem Winkelabschnitt ein bestimmter Teilwinkel von 360° zugeordnet. Das Zentrum bildet dabei die zentrale optische Achse. Der Winkelabschnitt wird dabei durch zwei Winkelschenkel begrenzt, die von dem Zentrum in radialer Richtung ausgehen und den dem Winkelabschnitt zugeordneten Teilwinkel einschließen.

Die runde Form der Linsenbereiche, welche beispielsweise kreisrund oder oval ausgebildet sein kann, bezieht sich auf den Verlauf der Grenze oder der Übergänge zwischen den einzelnen Linsenbereichen. Der Verlauf der Grenze bildet eine runde, in sich geschlossene Kurve. Unter der Annahme, die Grenze zwischen den Linsenbereichen wäre markiert, so könnte ein Betrachter diese bei einer Aufsicht auf die Linse in Richtung der optischen Achse als runde, konzentrisch angeordnete Ringe erkennen.

Der zentrale Linsenbereich und die ringförmigen Linsenbereiche bilden die Vorderoptikzone, welche eine Additionswirkung bei der Abbildung von Objekten auf der Netzhaut erzeugt. Sie weist beispielsweise einen Durchmesser von 7,0 bis 9,0 mm, insbesondere von 8,0 mm auf. Der zentrale Linsenbereich weist beispielsweise einen Durchmesser von 1,5 mm bis 4,0 mm, vorzugsweise von 1,8 mm bis 3,6 mm auf. Die numerische Exzentrizität des zentralen Linsenbereichs beträgt beispielsweise 0,0 bis -0,2. Der Außendurchmesser des peripheren ringförmigen Linsenbereichs beträgt beispielsweise 5,0 mm bis 9,0 mm.

Die Linse kann weich oder formstabil sein. Sie kann ferner rotationssymmtrische oder nicht rotationssymmetrische Vorder- und/ oder Rückseiten aufweisen. Sie kann sphärisch oder aspärisch sein.

Die Anzahl und die Breite der ringförmigen Linsenbereiche, der Durchmesser des zentralen Linsenbereichs, die verschiedenen Brennweiten, Krümmungsradien und die Exzentrizität sind von Linse zu Linse variabel. Sie werden an die Sehanforderung der die Linse tragenden Person angepasst.

Die erfindungsgemäße Linse bietet mit ihren ringförmigen Linsenbereichen und ihrem zentralen Linsenbereich eine gezielte Additionswirkung. Aufgrund der Breite der ringförmigen Linsenbereiche, innerhalb der die Brennweite, und der Krümmungsradius konstant ist, kann bei der Additionswirkung eine Gewichtung für bestimmte Objektentfernungen und bestimmte Objektpositionen erfolgen. Dies ist ein entscheidender Vorteil der erfindungsgemäßen Linse gegenüber Linsen, bei denen sich die Brennweite vom Zentrum zum Rand der optischen Zone kontinuierlich ändert. Kommt es bei einer als Kontaktlinse ausgebildeten erfindungsgemäßen Linse zu einer relativen Verschiebung der Linse auf dem Auge, so wird eine zusätzliche additive optische Wirkung erreicht, welche die Mehrstärken-Abbildung verstärkt und dadurch die Sehqualität erhöht. Eine derartige Verschiebung der Linse tritt beispielsweise bei einem Blick nach unten auf. Dabei verschiebt sich die Linse relativ zur Pupille nach oben.

Gegenüber bekannten ringförmig aufgebauten Multifokallinsen mit sich abwechselnden Nahsicht- und Fernsichtzonen hat die erfindungsgemäße Linse den Vorteil, dass die Abbildung kontrastreicher ist und damit die Sehqualität deutlich verbessert wird.

Nach einer vorteilhaften Ausgestaltung der Erfindung befinden sich die Krümmungsmittelpunkte der ringförmigen Linsenbereiche alle unterhalb oder alle oberhalb einer Horizontalebene der Linse. Dabei verläuft die Horizontalebene der Linse durch die zentrale optische Achse und bildet die Grenze zwischen einen oberen Abschnitt der Linse von einem unteren Abschnitt der Linse.

Nach einer weiteren vorteilhaften Ausgestaltung der Erfindung befinden sich alle Krümmungsmittelpunkte unterhalb einer Horizontalebene der Linse. Dies führt dazu, dass sich die Krümmungsmittelpunkte der ringförmigen Linsenbereiche bei einer Verschiebung der auf dem Auge angeordneten Linse nach oben in Richtung der Hauptfixierachse des Auges bewegen.

Nach einer weiteren vorteilhaften Ausgestaltung der Erfindung vergrößert sich der Abstand zwischen dem Krümmungsmittelpunkt und der zentralen optischen Achse von Linsenbereich zu Linsenbereich. Damit ist berücksichtigt, dass sich die Linse um so weiter auf dem Auge verschiebt, je weiter eine Person ihren Blick nach unten oder oben richtet.

Nach einer vorteilhaften Ausgestaltung der Erfindung sind ein oder mehrere Linsenbereiche rotationssymmetrisch bezogen auf eine durch ihren Krümmungsmittelpunkt verlaufende Symmetrieachse. Dies gilt beispielsweise bei sphärisch ausgebildeten Linsenbereichen. Die Linsenbereiche können jedoch auch nicht rotationssymmetrisch sein.

Nach einer weiteren vorteilhaften Ausgestaltung der Erfindung sind der zentrale Linsenbereich und/ oder die ringförmigen Linsenbereiche sphärisch. Dies hat den Vorteil einer einfachen Herstellung und einem sanften Übergang von einem Linsenbereich zum benachbarten Linsenbereich betreffend die äußere Form. Diese wird insbesondere durch die Krümmung bestimmt.

Nach einer weiteren vorteilhaften Ausgestaltung der Erfindung weist die Grenze zwischen den Linsenbereichen einen kreisförmigen Verlauf auf. Der zentrale Linsenbereich bildet damit bei einer Aufsicht auf die Linse in Richtung der optischen Achse eine kreisrunde Zone. Die ringförmigen Linsenbereiche bilden kreisrunde Ringe um den zentralen Linsenbereich.

Nach einer weiteren vorteilhaften Ausgestaltung der Erfindung befinden sich die Linsenbereiche an der Vorderseite der Linse. Die der Hornhaut zugewandte Rückseite der Linse kann damit bei Kontaktlinsen an die Topografie des Auges angepasst sein.

Nach einer weiteren vorteilhaften Ausgestaltung der Erfindung weist die Krümmung eines Linsenbereichs an der Grenze zu seinem benachbarten Linsenbereich die gleiche Steigung auf. Es handelt sich damit bezüglich der Krümmung der benachbarten Linsenbereiche im mathematischen Sinn um einen stetigen Übergang. Dies bedeutet, dass eine die optische Achse der Linse schneidende Tangente an einen Linsenbereich an der Grenze zu seinem benachbarten Linsenbereich identisch ist zu einer die optische Achse schneidende Tangente an den benachbarten Linsenbereich. Die Tangenten weisen die gleiche Steigung auf. In dem die Grenze zweier benachbarter Linsenbereiche enthaltenden Übergangsbereich ändert sich der Krümmungsradius kontinuierlich, so dass ein stufenloser Übergang der Krümmungsradien erfolgt. Davon abgesehen sind die Krümmungsradien innerhalb der jeweiligen Linsenbereiche konstant. Dadurch werden bei sich relativ zum Auge bewegenden Kontaktlinsen typische Aberrationsfehler vermieden oder verringert.

Nach einer weiteren vorteilhaften Ausgestaltung der Erfindung ist mindestens einer der Linsenbereiche als Nahsichtzone und mindestens einer der Linsenbereiche als Fernsichtzone ausgebildet, wobei der Krümmungsradius des als Fernsichtzone ausgebildeten Linsenbereichs größer ist als der Krümmungsradius des als Nahsichtzone ausgebildeten Linsenbereichs.

Nach einer weiteren vorteilhaften Ausgestaltung der Erfindung weist mindestens ein ringförmiger Linsenbereich in radialer Richtung überall die gleiche Breite auf. Dies gilt insbesondere, wenn die Linsenbereiche kreisrund sind. Die Breite in radialer Richtung entspricht dabei der Ausdehnung in radialer Richtung bezogen auf die zentrale optische Achse.

Nach einer weiteren vorteilhaften Ausgestaltung der Erfindung ist mindestens einer der ringförmigen Linsenbereiche in mindestens zwei Winkelabschnitte unterteilt, deren Brennweite unterschiedlich ist. Dadurch kann die Linse unterschiedliche Additionswirkungen unter verschiedenen Winkeln erzeugen. Damit ergibt sich im radialen Schnitt der Linse ein multifokales Linsendesign und im kreisförmigen oder umfangsseitigen Schnitt ein bi- oder multifokales Linsendesign mit variablen Stärken, je nachdem in wie viele Winkelabschnitte ein Linsenbereich unterteilt ist. Die Winkelabschnitte eines Linsenbereichs können gleich groß oder unterschiedlich groß sein. Die Winkelabschnitte eines Linsenbereichs können eine Grenze aufweisen oder stufenlos ineinander verblendet sein.

So kann beispielsweise mindestens ein Linsenbereich in vier Winkelabschnitte unterteilt sein. Diese können auch als Quadranten bezeichnet werden. Die Winkelabschnitte können gleich groß oder unterschiedlich groß sein. Auf diese Weise können der obere Winkelabschnitt, der untere Winkelabschnitt, der rechte und der linke Winkelabschnitt unterschiedliche Brennweiten aufweisen und damit zusätzlich zu der multifokalen Eigenschaft der Tatsache Rechnung tragen, dass das menschliche Auge in den entsprechenden Richtungen unten, oben, rechts und links unterschiedliche Sehstärken aufweisen kann.

Weitere Vorteile und vorteilhafte Ausgestaltungen der Erfindung können der nachfolgenden Beschreibung, der Zeichnung oder den Ansprüchen entnommen werden.

Zeichnung

In der Zeichnung sind zwei Ausführungsbeispiele der Erfindung dargestellt. Es zeigen:

Figur 1   erstes Ausführungsbeispiel einer multifokalen ophthalmologischen Linse in einer Ansicht von vorne,

Figur 2   schematische Darstellung der Krümmungsradien und der Durchmesser der Linsenbereiche der Linse gemäß Figur 1,

Figur 3   schematische Darstellung der Krümmung des zentralen Linsenbereichs und des benachbarten ringförmigen Linsenbereichs der Linse gemäß Figur 1 im Übergangsbereich,

Figur 4   zweites Ausführungsbeispiel einer multifokalen ophthalmologischen Linse in einer Ansicht von vorne.

Beschreibung der Ausführungsbeispiele

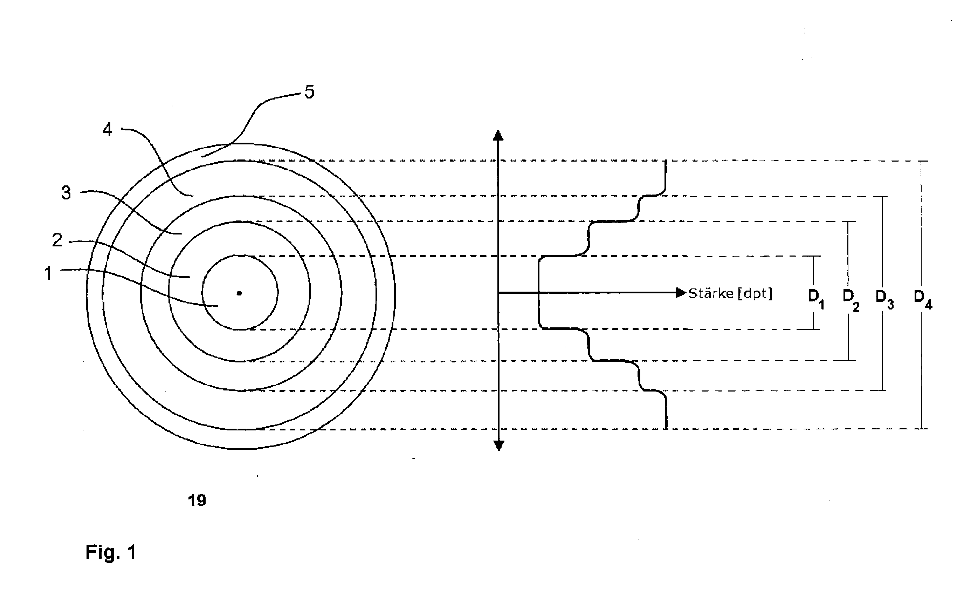

In Figur 1 ist ein erstes Ausführungsbeispiel einer multifokalen ophthalmologischen Linse in einer Ansicht von vorne dargestellt. Es handelt sich hierbei um eine Kontaktlinse. Die Linse weist auf ihrer Vorderseite einen zentralen Linsenbereich 1 und konzentrische ringförmige Linsenbereiche 2, 3 und 4 auf. Die Linsenbereiche 1, 2, 3 und 4 bilden die Vorderoptikzone, welche eine Additionswirkung aufweist. Der periphere ringförmige Linsenbereich 4 ist von einer Randzone 5 umgeben, welche ebenfalls ringförmig ist. Die Randzone weist keine Additionswirkung auf. Die zentrale optische Achse 19 der Linse ist in linken Teil von Figur 1 als Punkt dargestellt. Sie entspricht der Symmetrieachse des zentralen Linsenbereichs 1. Die zentrale optische Achse verläuft senkrecht zur Zeichenebene. Der Punkt entspricht dem Schnittpunkt zwischen der zentralen optischen Achse 19 und der Zeichenebene. Alle Linsenbereiche 1, 2, 3, 4 und die Randzone 5 sind um die zentrale optische Achse 19 herum angeordnet. In der Darstellung sehen sie aus, wie konzentrische Ringe.

Die Linsenbereiche 1, 2, 3 und 4 weisen je eine unterschiedliche Brennweite, einen unterschiedlichen Krümmungsradius und eine unterschiedliche Dioptrienzahl auf. Dies ist im mittlere Teil von Figur 1 dargestellt. Dort ist die Dioptrienzahl in Abhängigkeit von der radialen Position auf der Linse aufgetragen bezogen auf die zentrale optische Achse 19 aufgetragen. In dieser Darstellung entspricht die zentrale optische Achse 19 der Abszisse oder x-Achse. Die Abszisse ist mit dem Hinweis "Stärke (dpt)" gekennzeichnet. Dies bedeutet, dass die Stärke oder Dioptrienzahl in dpt angegeben ist. Eine entsprechende Darstellung gilt für die Krümmungsradien und die Brennweite der Linsenbereiche. Innerhalb der Linsenbereiche 1, 2, 3 und 4 sind die Dioptrienzahl, die Brennweite und der Krümmungsradius nicht nur in radialer Richtung sondern auch in Umfangsrichtung konstant. Von Linsenbereich zu Linsenbereich ändern sich die Dioptrienzahl und die Brennweite stufenweise. In einem Übergangsbereich zwischen zwei benachbarten Linsenbereichen ändert sich der Krümmungsradius stetig. Dabei sind die Übergangsbereiche klein gegenüber dem Durchmesser des zentralen Linsenbereichs 1 und gegenüber der Breite der ringförmigen Linsenbereiche 2, 3, 4. Die Dioptrienzahl in dem zentralen Linsenbereich 1 ist am kleinsten. In dem zweiten Linsenbereich 2 ist sie größer als im zentralen Linsenbereich 1. In dem dritten Linsenbereich 3 ist sie größer als im zweiten Linsenbereich 2. Im vierten Linsenbereich 4 ist die größer als im dritten Linsenbereich 3. Die Brennweite ändert sich von Linsenbereich zu Linsenbereich entsprechend.

Im rechten Teil von Figur 1 sind der Durchmesser $D_1$ des zentralen Linsenbereichs 1, der Durchmesser $D_2$ des zweiten, ringförmigen Linsenbereichs 2, der Durchmesser $D_3$ des dritten, ringförmigen Linsenbereichs 3 und der Durchmesser $D_4$ des vierten, ringförmigen Linsenbereichs 4 dargestellt. Der Linsenbereich 1 weist eine kreisrunde Form auf. Die Linsenbereiche 2, 3, 4 weisen in der Darstellung gemäß Figur 1 die Form von kreisförmigen Ringen mit einem Außendurchmesser und einem Innendurchmesser auf. Die Grenzen zwischen den Linsenbereichen 1, 2, 3, 4 haben jeweils den Verlauf eines Kreises. Dabei sind die Durchmesser $D_1$, $D_2$, $D_3$, $D_4$ der den Linsenbereichen 1, 2, 3, 4 zugeordneten Kreisen unterschiedlich. Der Mittelpunkt der den Linsenbereichen 1, 2, 3, 4 zugeordneten Kreise wird für alle Kreise durch die optische Achse 19 gebildet. Diese erstreckt sich durch das Zentrum des zentralen Linsenbereichs 1. Die Durchmesser $D_1$, $D_2$, $D_3$, $D_4$ sind die Außendurchmesser der Linsenbereiche 1, 2, 3, 4.

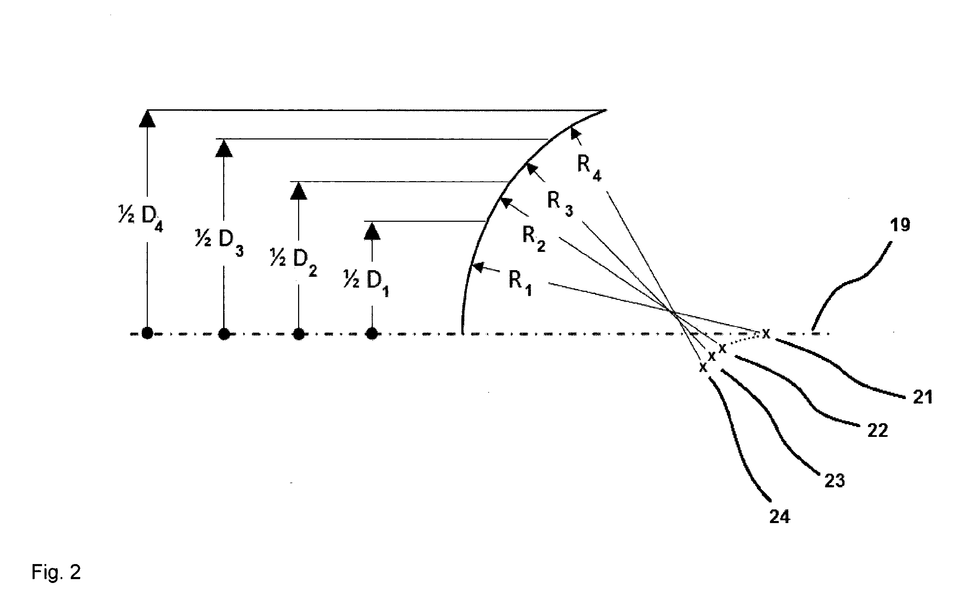

In Figur 2 sind die Krümmungsradien $R_1$, $R_2$, $R_3$ und $R_4$ der Linsenbereiche 1, 2, 3, 4 schematisch dargestellt. $R_1$ ist der Krümmungsradius des zentralen Linsenbereichs 1, $R_2$ der Krümmungsradius des zweiten Linsenbereichs, $R_3$ der Krümmungsradius des dritten Linsenbereichs und $R_4$ der Krümmungsmittelpunkt des vierten Linsenbereichs. $R_1$, $R_2$, $R_3$ und $R_4$ sind dabei die innerhalb der Linsenbereiche 1, 2, 3, 4 konstanten Krümmungsradien. Die kontinuierliche Änderung der Krümmungsradien in einem schmalen Übergangsbereich zwischen den Linsenbereichen ist in Figur 2 nicht dargestellt.

Der Krümmungsmittelpunkt 21 des zentralen Linsenbereichs 1 liegt auf der zentralen optischen Achse 19 der Linse. Durch die zentrale optische Achse erstreckt sich eine Horizontalebene der Linse. Die Horizontalebene schneidet die Zeichenebene der Figur 2 in der zentralen optischen Achse 19. Der Krümmungsmittelpunkt 22 des zweiten Linsenbereichs 2 liegt unterhalb der Horizontalebene und damit in der Zeichnung unterhalb der zentralen optischen Achse 19. Entsprechendes gilt für den Krümmungsmittelpunkt 23 des dritten Linsenbereichs 3 und den Krümmungsmittelpunkt 24 des vierten Linsenbereichs 4. Die Krümmungsmittelpunkte 21, 22, 23, 24 liegen auf einer Kurve, die in der Zeichnung gestrichelt dargestellt ist. Für die Krümmungsradien gilt, dass diese von Linsenbereich zu Linsenbereich kleiner werden. Es gilt:

$$R_1 > R_2 > R_3 > R_4$$

Alternativ können die Krümmungsradien von Linsenbereich zu Linsenbereich auch größer werden. In diesem Fall gilt:

$$R_1 < R_2 < R_3 < R_4$$

In der linken Bildhälfte von Figur 2 sind die halben Durchmesser $\frac{1}{2} D_1$, $\frac{1}{2} D_2$, $\frac{1}{2} D_3$, $\frac{1}{2} D_4$ der Linsenbereiche 1, 2, 3, 4 dargestellt. Die radiale Breite der Linsenbereiche ergibt sich aus der Differenz der halben Durchmesser zweier benachbarter Linsenbereiche.

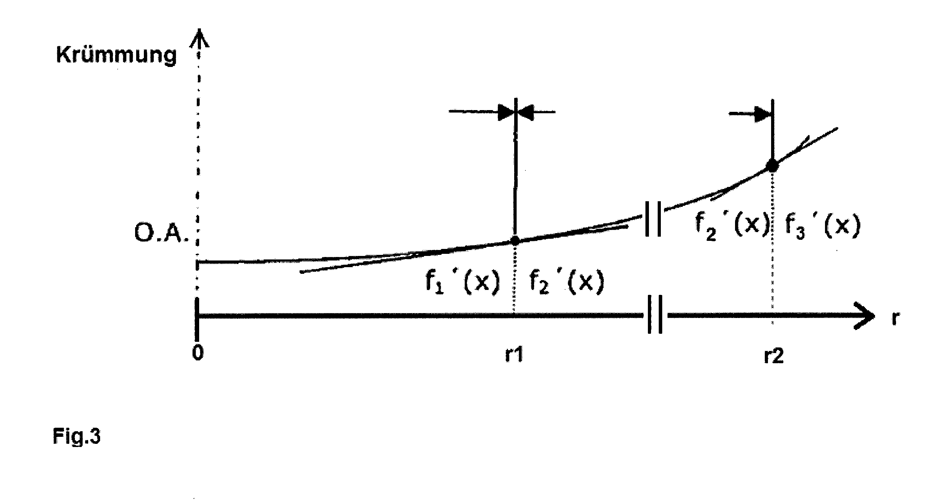

In Figur 3 ist die Krümmung des zentralen Linsenbereichs 1 und des benachbarten ringförmigen Linsenbereichs 2 im Übergangsbereich zwischen den beiden Linsenbereichen 1, 2 schematisch dargestellt. Ebenso dargestellt ist die Krümmung des zweiten Linsenbereichs 2 und des dritten Linsenbereichs 3 im Übergangsbereich. In dem Diagramm ist auf der Abszisse der Abstand von der optischen Achse 19 in radialer Richtung aufgetragen. Die optische Achse ist mit O.A. abgekürzt. Sie erstreckt sich an der Position r=0 senkrecht zur Oberfläche der Vorderseite der Linse. Als Ordinate ist die Krümmung der einzelnen Linsenbereiche 1, 2, 3 an der Vorderseite der Linse aufgetragen. Die Krümmung wird durch den Krümmungsradius und den Krümmungsmittelpunkt bestimmt. Aus der Darstellung wird deutlich, dass sich die Krümmung im Übergangsbereich zwischen dem zentralen Linsenbereich 1 und dem zweiten Linsenbereich 2 kontinuierlich ändert. Die Krümmung ist in dem Diagramm als Funktion f (r) dargestellt dargestellt. Dabei wird die Krümmung im zentralen Linsenbereich 1 durch die Funktion $f_1 (x)$ beschrieben. Die Krümmung im zweiten Linsenbereich 2 wird durch die Funktion $f_2 (x)$ beschrieben. Die Krümmung im dritten Linsenbereich 3 wird durch die Funktion $f_3 (x)$ beschrieben. Die Krümmung im vierten Linsenbereich 4 wird durch die Funktion $f_4 (x)$ beschrieben. An der Position $r = r_1$ im Übergangsbereich zwischen dem zentralen Linsenbereich 1 und dem zweiten Linsenbereich 2 gilt, dass die erste Ableitung von $f_1 (x)$ identisch ist mit der ersten Ableitung von $f_2 (x)$. Es gilt:

$$f_1' (r_1) = f_2' (r_1).$$

Darüber hinaus gilt:

$$f_1 (r_1) = f_2 (r_1).$$

Die Ableitungen der beiden Funktionen $f_1 (x)$ und $f_2 (x)$ an der Position $r = r_1$ sind in dem Diagramm als Tangenten an die Kurve dargestellt. Daraus wird ersichtlich, dass die Tangente bei $r = r_1$ an die Kurve $f_1$ identisch ist mit der Tangente bei $r = r_1$ an die Kurve $f_2$. Entsprechendes gilt für die Position $r = r_2$ im Übergangsbereich zwischen dem zweiten Linsenbereich 2 und dem dritten Linsenbereich 3 sowie für die Position $r = r_3$ im Übergangsbereich zwischen dem dritten Linsenbereich 3 und dem vierten Linsenbereich 4:

$$f_2 (r_2) = f_3 (r_2)$$

$$f_2' \, (r_2) = f_3' \, (r_2)$$

$$f_3 \, (r_3) = f_4 \, (r_3)$$

$$f_3' \, (r_3) = f_4' \, (r_3).$$

Die Positionen $r_1$, $r_2$, $r_3$ entsprechen nicht unbedingt den halben Durchmessern $D_1$, $D_2$, $D_3$. Dies kann so definiert werden, muss aber nicht. $r_3$ und $r_4$ sind in Figur 2 nicht dargestellt. Die Kurve der Funktion $f_3 \, (x)$ ist in Figur 2 nur teilweise dargestellt. Die Kurve der Funktion $f_4 \, (x)$ ist in Figur 2 nicht dargestellt.

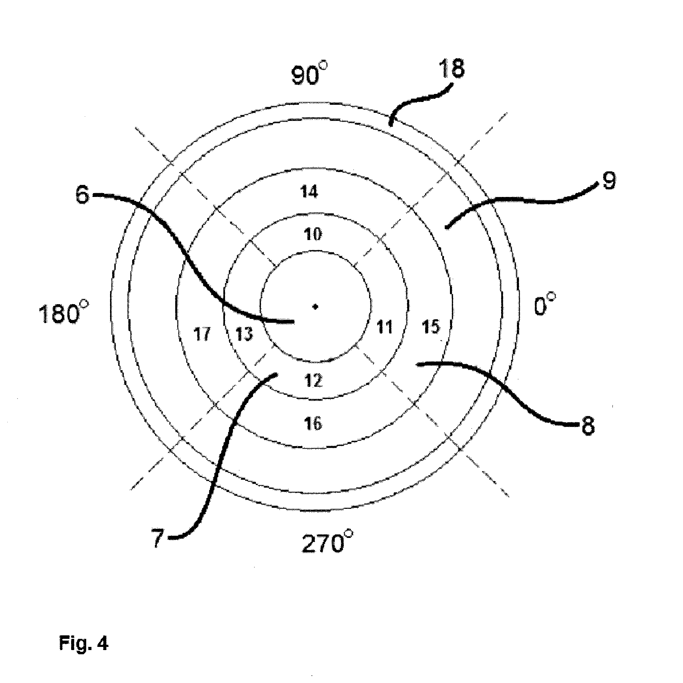

Um zu verdeutlichen, dass in dem Diagramm gemäß Figur 3 nur die Änderung der Krümmungsradien in dem Übergangsbereich zwischen zwei benachbarten Linsenbereichen 1 und 2 sowie 2 und 3 dargestellt ist, sind sowohl die Abszisse als auch der Graph unterbrochen. Zwischen den beiden Übergangsbereichen ist die Krümmung konstant. Dieser konstante Abschnitt ist in Figur 3 nicht dargestellt. In Figur 4 ist ein zweites Ausführungsbeispiel einer multifokalen ophthalmologischen Linse dargestellt, welche als Kontaktlinse ausgebildet ist. Sie weist wie die Linse gemäß Figur 1 an ihrer Vorderseite einen zentralen Linsenbereich 6, mehrere ringförmige Linsenbereiche 7, 8, 9 und einen Randbereich 18 auf. Sämtliche Bereiche 6, 7, 8, 9, 18 sind kreisförmig. Im Unterschied zu dem ersten Ausführungsbeispiel gemäß Figur 1 sind die beiden Linsenbereiche 7, 8 in jeweils vier Winkelabschnitte 10, 11, 12, 13, 14, 15, 16, 17 aufgeteilt, in denen die Brennweite und die Dioptrienzahl unterschiedlich ist. Damit sind der Krümmungsradius, die Brennweite und die Dioptrienzahl in den Linsenbereichen 7, 8 in radialer Richtung innerhalb der Winkelabschnitte 10, 11, 12, 13, 14, 15, 16, 17 konstant. Jedoch ändern sich der Krümmungsradius, die Brennweite und die Dioptrienzahl in den Linsenbereichen 7, 8 in Umfangsrichtung. Je zwei benachbarte Winkelabschnitte 10, 11, 12, 13, 14, 15, 16, 17 weisen eine unterschiedliche Brennweite und eine unterschiedliche Dioptrienzahl auf. Die Unterteilung der beiden Linsenbereiche 7, 8 ist in Figur 3 durch gestrichelte Linien angedeutet. In der Mitte der Winkelabschnitte 11 und 15 befindet sich der Winkel 0°. Die Grenze zu den Winkelabschnitten 10 und 14 verläuft unter einem Winkel von 45°. Die Grenze zwischen den Winkelabschnitten 10 und 14 einerseits und den Winkelabschnitten 13 und 17 andererseits verläuft unter einem Winkel von 135°. Die Grenze zwischen den Winkelabschnitten 13 und 17 einerseits und den Winkelabschnitten 12 und 16 andererseits verläuft unter einem Winkel von 225°. Die Grenze zwischen den Winkelabschnitten 12 und 16 einerseits und den Winkelabschnitten 11 und 15 andererseits verläuft unter einem Winkel von 315°. An der Grenze zwischen den beiden Linsenbereichen 7 und 8 ändert sich die Dioptrienzahl von einem der Winkelabschnitte 10, 11, 12, 13 des Linsenbereichs 7 zu einem der Winkelabschnitte 14, 15, 16, 17 des Linsenbereichs 8 entsprechend der Darstellung in Figur 1 stufenweise. An den gestrichelt gezeichneten Grenzen zwischen je zwei Winkelabschnitten eines Linsenbereichs 7, 8 ändert sich die Dioptrienzahl stufenlos und stetig.

Sämtliche Vorteile und vorteilhafte Ausgestaltungen der Erfindung können sowohl einzeln als auch in beliebiger Kombination miteinander erfindungswesentlich sein.

Bezugszahlen

1     zentraler Linsenbereich

2     zweiter Linsenbereich

3     dritter Linsenbereich

4     vierter Linsenbereich

5     Randzone

6     zentraler Linsenbereich

7     zweiter Linsenbereich

8       dritter Linsenbereich

9       vierter Linsenbereich

10      Winkelabschnitt des zweiten Linsenbereichs

11      Winkelabschnitt des zweiten Linsenbereichs

12      Winkelabschnitt des zweiten Linsenbereichs

13      Winkelabschnitt des zweiten Linsenbereichs

14      Winkelabschnitt des dritten Linsenbereichs

15      Winkelabschnitt des dritten Linsenbereichs

16      Winkelabschnitt des dritten Linsenbereichs

17      Winkelabschnitt des dritten Linsenbereichs

18      Randzone

19      zentrale optische Achse

20

21      Krümmungsmittelpunkt des zentralen Linsenbereichs

22      Krümmungsmittelpunkt des zweiten Linsenbereichs

23      Krümmungsmittelpunkt des dritten Linsenbereichs

24      Krümmungsmittelpunkt des vierten Linsenbereichs

**Patentansprüche**

1.  Multifokale ophthalmologische Linse
    mit einem zentralen runden rotationssymmetrischen Linsenbereich (1, 6) mit vorgegebener Brennweite, dessen Symmetrieachse der zentralen optischen Achse (19) der Linse entspricht,
    mit mehreren, den zentralen Linsenbereich (1, 6) umgebenden konzentrischen, ringförmigen Linsenbereichen (2, 3, 4, 7, 8, 9) mit unterschiedlichen Brennweiten,
    mit einem Krümmungsradius und einem Krümmungsmittelpunkt (21, 22, 23, 24) jedes Linsenbereichs (1, 2, 3, 4, 6, 7, 8, 9),
    wobei der Krümmungsradius innerhalb eines Linsenbereichs (1, 2, 3, 4, 6, 7 , 8, 9) zumindest in radialer Richtung ausgehend von der zentralen optischen Achse (19) im wesentlichen konstant ist, und
    wobei der Krümmungsradius beginnend mit dem zentralen Linsenbereich (1, 6) bis zum äußersten ringförmigen Linsenbereich (4, 9) von Linsenbereich (1, 2, 3, 4, 6, 7, 8, 9) zu Linsenbereich (1, 2, 3, 4, 6, 7, 8, 9) im wesentlichen stufenweise abnimmt oder zunimmt und
    wobei die Krümmungsmittelpunkte (22, 23, 24) der ringförmigen Linsenbereiche (2, 3, 4, 7, 8, 9) abseits der zentralen optischen Achse (19) der Linse sind.

2.  Linse nach Anspruch 1, **dadurch gekennzeichnet, dass** die vertikal ausgerichtete Linse einen oberen Abschnitt und einen unteren Abschnitt aufweist, wobei die Grenze zwischen dem oberen und unteren Abschnitt durch eine Horizontalebene gebildet wird, die durch die zentrale optische Achse (19) der Linse verläuft, und dass die Krümmungsmittelpunkte (22, 23, 24) der ringförmigen Linsenbereiche (2, 3, 4, 7, 8, 9) alle unterhalb oder alle oberhalb der Horizontalebene sind.

3. Linse nach Anspruch 2, **dadurch gekennzeichnet, dass** sich alle Krümmungsmittelpunkte (22, 23, 24) der ringförmigen Linsenbereiche (2, 3, 4, 7, 8, 9) unterhalb der Horizontalebene befinden.

4. Linse nach Anspruch 2 oder 3, **dadurch gekennzeichnet, dass** sich der Abstand zwischen dem Krümmungsmittelpunkt (22, 23, 24) eines ringförmigen Linsenbereichs (2, 3, 4, 7, 8, 9) und der zentralen optischen Achse (19) von Linsenbereich (2, 3, 4, 7, 8, 9) zu Linsenbereich (2, 3, 4, 7, 8, 9) vergrößert.

5. Linse nach einem der vorhergehenden Ansprüche, **dadurch gekennzeichnet, dass** ein Linsenbereich oder mehrere Linsenbereiche (1, 2, 3, 4) rotationssymmetrisch sind.

6. Linse nach einem der vorhergehenden Ansprüche, **dadurch gekennzeichnet, dass** ein Linsenbereich oder mehrere Linsenbereiche (1, 2, 3, 4) sphärisch sind.

7. Linse nach einem der vorhergehenden Ansprüche, **dadurch gekennzeichnet, dass** ein Linsenbereich oder mehrere Linsenbereiche (1, 2, 3, 4) torisch sind.

8. Linse nach einem der vorhergehenden Ansprüche, **dadurch gekennzeichnet, dass** die Grenze zwischen den Linsenbereichen (1, 2, 3, 4, 6, 7, 8, 9) einen kreisrunden Verlauf aufweist.

9. Linse nach einem der vorhergehenden Ansprüche, **dadurch gekennzeichnet, dass** mindestens ein ringförmiger Linsenbereich (2, 3, 4) in radialer Richtung überall die gleiche Breite aufweist.

10. Linse nach einem der vorhergehenden Ansprüche, **dadurch gekennzeichnet, dass** die Linsenbereiche (1, 2, 3, 4, 6, 7, 8, 9) an der Vorderseite der Linse sind.

11. Linse nach einem der vorhergehenden Ansprüche, **dadurch gekennzeichnet, dass** sich der Krümmungsradius eines Linsenbereichs (1, 2, 3, 4, 6, 7, 8, 9) im Übergangsbereich zum benachbarten Linsenbereich (1, 2, 3, 4, 6, 7, 8, 9) kontinuierlich ändert, wobei der Übergangsbereich klein ist gegenüber der Breite der Linsenbereiche in radialer Richtung bezogen auf die zentrale optische Achse.

12. Linse nach einem der vorhergehenden Ansprüche, **dadurch gekennzeichnet, dass** mindestens einer der Linsenbereiche (1, 2, 3, 4, 6, 7, 8, 9) als Nahsichtzone und mindestens einer der Linsenbereiche (1, 2, 3, 4, 6, 7, 8, 9) als Fernsichtzone ausgebildet ist, und dass der Krümmungsradius des als Fernsichtzone ausgebildeten Linsenbereichs größer ist als der Krümmungsradius des als Nahsichtzone ausgebildeten Linsenbereichs.

13. Linse nach einem der vorhergehenden Ansprüche, **dadurch gekennzeichnet, dass** mindestens einer der ringförmigen Linsenbereiche (7, 8, 9) in mindestens zwei Winkelabschnitte (10, 11, 12, 13, 14, 15, 16, 17) unterteilt ist, und dass die Brennweite in den mindestens zwei Winkelabschnitten (10, 11, 12, 13, 14, 15, 16, 17) unterschiedlich ist.

14. Linse nach Anspruch 13, **dadurch gekennzeichnet, dass** mindestens einer der ringförmigen Linsenbereiche (7, 8, 9) der Linse vier Winkelabschnitte (10, 11, 12, 13, 14, 15, 16, 17) aufweist, einen unteren Winkelabschnitt, einen oberen Winkelabschnitt, einen rechten und einen linken Winkelabschnitt.

Fig. 1

EP 2 781 952 A1

Fig. 2

Fig.3

EP 2 781 952 A1

Fig. 4

Europäisches
Patentamt

European
Patent Office

Office européen
des brevets

# EUROPÄISCHER RECHERCHENBERICHT

Nummer der Anmeldung

EP 13 00 1494

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 428 835 A1 (OPTO TECH OPTIKMASCHINEN GMBH [DE]) 14. März 2012 (2012-03-14) * Absatz [0059] - Absatz [0063]; Abbildungen 1-4 * | 1-14 | INV. G02C7/04 |
| Y | EP 0 574 590 A1 (SEIKO EPSON CORP [JP]) 22. Dezember 1993 (1993-12-22) * Seite 7, Zeile 11 - Seite 9, Zeile 19; Abbildungen 1-18 * | 1-14 | |
| Y | US 2005/062933 A1 (PEREL IVAN MAURICE [IL] ET AL) 24. März 2005 (2005-03-24) * Absatz [0088] - Absatz [0130]; Abbildungen 1-4; Tabellen I-VI * | 1-14 | |
| Y | US 2010/036489 A1 (LINDACHER JOSEPH MICHAEL [US] ET AL) 11. Februar 2010 (2010-02-11) * Absatz [0019] - Absatz [0031]; Abbildungen 1, 2 * | 1-14 | |
| A | WO 91/09336 A1 (SEIDNER LEONARD [US]) 27. Juni 1991 (1991-06-27) * Seite 14, Zeile 9 - Seite 42, Zeile 19; Abbildungen 1-60 * | 1-14 | RECHERCHIERTE SACHGEBIETE (IPC) G02C |
| A | US 6 176 579 B1 (MANDELL ROBERT B [US]) 23. Januar 2001 (2001-01-23) * Spalte 4, Zeile 9 - Spalte 5, Zeile 25; Abbildungen 1-4 * | 1-14 | |
| A | DE 14 22 125 B1 (AKADEMIE D WISSENSCHAFTEN ZU B) 4. September 1969 (1969-09-04) * Spalte 1, Zeile 60 - Spalte 3, Zeile 12; Abbildung 1 * | 1-14 | |

Der vorliegende Recherchenbericht wurde für alle Patentansprüche erstellt

| Recherchenort | Abschlußdatum der Recherche | Prüfer |
|---|---|---|
| München | 30. August 2013 | Bratfisch, Knut |

**ANHANG ZUM EUROPÄISCHEN RECHERCHENBERICHT
ÜBER DIE EUROPÄISCHE PATENTANMELDUNG NR.**      EP 13 00 1494

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-08-2013

| Im Recherchenbericht angeführtes Patentdokument | Datum der Veröffentlichung | Mitglied(er) der Patentfamilie | Datum der Veröffentlichung |
|---|---|---|---|
| EP 2428835 A1 | 14-03-2012 | CA 2751793 A1<br>DE 102010037400 A1<br>EP 2428835 A1<br>US 2012057123 A1 | 08-03-2012<br>08-03-2012<br>14-03-2012<br>08-03-2012 |
| EP 0574590 A1 | 22-12-1993 | DE 69226172 D1<br>DE 69226172 T2<br>EP 0574590 A1<br>JP 3286977 B2<br>US 5541678 A<br>WO 9314434 A1 | 13-08-1998<br>17-12-1998<br>22-12-1993<br>27-05-2002<br>30-07-1996<br>22-07-1993 |
| US 2005062933 A1 | 24-03-2005 | CA 2521240 A1<br>EP 1640785 A2<br>JP 2006099116 A<br>US 2005062933 A1<br>US 2006250575 A1<br>US 2007019153 A1<br>US 2007019154 A1 | 27-03-2006<br>29-03-2006<br>13-04-2006<br>24-03-2005<br>09-11-2006<br>25-01-2007<br>25-01-2007 |
| US 2010036489 A1 | 11-02-2010 | AU 2009282321 A1<br>CA 2731330 A1<br>CN 102119354 A<br>CN 103257458 A<br>EP 2321690 A2<br>JP 2011530726 A<br>KR 20110040983 A<br>RU 2011106763 A<br>TW 201011371 A<br>US 2010036489 A1<br>WO 2010019397 A2 | 18-02-2010<br>18-02-2010<br>06-07-2011<br>21-08-2013<br>18-05-2011<br>22-12-2011<br>20-04-2011<br>20-09-2012<br>16-03-2010<br>11-02-2010<br>18-02-2010 |
| WO 9109336 A1 | 27-06-1991 | AU 6978991 A<br>CA 2070832 A1<br>EP 0504298 A1<br>WO 9109336 A1 | 18-07-1991<br>08-06-1991<br>23-09-1992<br>27-06-1991 |
| US 6176579 B1 | 23-01-2001 | KEINE | |
| DE 1422125 B1 | 04-09-1969 | KEINE | |

EPO FORM P0461

Für nähere Einzelheiten zu diesem Anhang : siehe Amtsblatt des Europäischen Patentamts, Nr.12/82